# EUROPÄISCHE PATENTSCHRIFT

(11) **EP 2 856 553 B1**
(45) Veröffentlichungstag und Bekanntmachung des Hinweises auf die Patenterteilung: **03.01.2018**
(21) Anmeldenummer: 13724517.1
(22) Anmeldetag: 13.05.2013
(51) Int. Cl.: H01M 10/48, H01M 10/42, H01M 2/10, G01K 1/02, G01K 7/24, G01K 3/14

(54) **MODULARES SYSTEM, INSBESONDERE MODULAR AUFGEBAUTER ENERGIESPEICHER**
MODULAR SYSTEM, PARTICULARLY MODULARLY CONSTRUCTED ENERGY STORE
SYSTÈME MODULAIRE, EN PARTICULIER ACCUMULATEUR D'ÉNERGIE À STRUCTURE MODULAIRE

(30) Priorität: 01.06.2012 DE 102012010788
(43) Veröffentlichungstag der Anmeldung: 08.04.2015
(73) Patentinhaber: Sew-Eurodrive GmbH & Co. KG, 76646 Bruchsal (DE)
(72) Erfinder: SCHIFFMANN, Sebastian, 76709 Kronau (DE); LAMPERT, Christian, 76646 Bruchsal (DE); HAUCK, Matthias, 68723 Schwetzingen (DE); SCHMIDT, Josef, 76676 Graben-Neudorf (DE); TRITSCHLER, Daniel, 76646 Bruchsal (DE); ZÖLLER, Thomas, 76646 Bruchsal (DE)
(86) Internationale Anmeldenummer: PCT/EP2013/001402
(87) Internationale Veröffentlichungsnummer: WO 2013/178324

(56) Entgegenhaltungen:
- DE-A1-102009 045 245
- DE-A1-102010 062 844
- US-A1- 2005 206 347
- US-A1- 2007 018 780

## Beschreibung

Die Erfindung betrifft ein modulares System, insbesondere modular aufgebauter Energiespeicher.

Es ist allgemein bekannt, dass Module eines Systems eine zu hohe Betriebstemperatur aufweisen können, so dass die Funktion des jeweiligen, die unzulässig hohe Betriebstemperatur aufweisenden Moduls nicht gewährleistbar ist.

Es ist ebenfalls bekannt, Sensormodule als Feldbusteilnehmer auszuführen, so dass die vom Sensor zu detektierenden Informationen über einen Feldbus, wie Interbus, Profibus, CAN-Bus oder dergleichen, übermittelbar sind. Dabei weist jedes Sensormodul eine es identifizierende individuell zu vergebende Adresse auf.

**Aus der** US 2005/206347 A1 **ist eine Spannungsversorgungseinheit mit Batterie und Temperatursensor bekannt, wobei eine sternförmige Zusammenführung der Sensorsignale vorgesehen ist.**

**Aus der** US 2007/018780 A1 **ist eine Spannungsversorgung für Automobile bekannt, wobei eine sternförmige Zusammenführung der Sensorsignale vorgesehen ist.**

**Aus der** DE 10 2009 045245 A1 **ist eine Sensoreinrichtung für die Erfassung der Maximaltemperatur mehrerer Batteriezellen bekannt, wobei eine sternförmige Zusammenführung der Sensorsignale vorgesehen ist.**

Der Erfindung liegt daher die Aufgabe zugrunde, ein modulares System, insbesondere einen modular aufgebauten Energiespeicher weiterzubilden, wobei eine erhöhte Sicherheit gewährleistbar sein soll.

Erfindungsgemäß wird die Aufgabe bei dem modularen System, insbesondere modular aufgebauten Energiespeicher, nach den in Anspruch 1 angegebenen Merkmalen gelöst.

Von Vorteil ist dabei, dass in einfacher Weise erkennbar ist, ob eines der Module eine unzulässig hohe Temperatur aufweist. Dabei ist es unwichtig, welches der Module das gefährdete Modul ist. Denn bei einer Serien-Schaltung der Module ist die Funktion des gesamten Systems gefährdet, wenn die Funktion eines einzelnen Moduls gefährdet ist.
Vorteiligerweise ist in jedem Modul eine Schaltungsanordnung angeordnet, die ein Ausgangssignal zur Verfügung stellt. Somit ist eine Überwachung jedes Moduls in einfacher Weise ausführbar, wobei kein aufwendiger Verdrahtungsaufwand für Signalleitungen im System notwendig ist. Außerdem ist auch kein aufwendiger Feldbus notwendig für die Übermittlung der Sensor-Informationen an die zentrale Einheit.

Die Module weisen unabhängig von den Schaltungsanordnungen und Signalleitungen auch Leistung übertragende Leitungen auf, insbesondere Stromschienen. Mittels dieser Leistung übertragenden Leitungen ist die zentrale Einheit versorgbar.

Die Module sind voneinander beabstandet positionierbar, wobei sie unterschiedlichen Umgebungstemperaturen ausgesetzt sein dürfen. Beispielsweise ist ein Modul in der Nähe eines elektrischen Verbrauchers oder sogar in wärmeleitender Verbindung mit einem elektrischen Verbraucher angeordnet, wodurch eine erhöhte Wärmebelastung dieses Moduls vorhanden ist. Außerdem erzeugen die Module im Betrieb selbst wiederum Verlustwärme, die ebenfalls zur Wärmebelastung des jeweiligen Moduls beiträgt.

Auch bei direktem Verbinden der Module miteinander ist die Temperatur der Module nicht identisch, da auch durch Toleranzen der Bauteile oder durch unterschiedlich starke, von der Umgebung lokal eingeleitete Wärmeströme unterschiedliche Temperaturen in den Modulen bewirken.

Bei einer vorteilhaften Ausgestaltung stellen die Module, insbesondere Energiespeichermodule, jeweils eine Spannungsquelle zur Verfügung und sind die Spannungsquellen in Reihe oder parallel zusammengeschaltet, so dass die somit zur Verfügung gestellte Gesamtspannungsquelle die zentrale Einheit versorgt, insbesondere mit elektrischer Leistung. Von Vorteil ist dabei, dass das System einen modular aufgebauten Energiespeicher aufweist. Somit ist eine beliebige Anzahl von Modulen vorsehbar, ohne dass ein von der Anzahl der Module abhängiger Verdrahtungsaufwand für Signalleitungen notwendig ist.

Bei einer vorteilhaften Ausgestaltung weist die zentrale Einheit einen umrichtergespeisten Elektromotor und/oder einen anderen elektrischen Verbraucher auf, der aus den Modulen versorgbar ist, insbesondere versorgt wird. Von Vorteil ist dabei, dass hohe elektrische Leistungen bereitstellbar sind mittels der Module. Unabhängig von dem Leistungsübertragungskanal ist ein als einfache Signalleitung ausgeführter Signalübertragungskanal vorhanden.

Bei einer vorteilhaften Ausgestaltung weist die zentrale Einheit eine Auswerteeinheit auf, mit welcher der über die Signalleitung übertragene Spannungswert als Fehlerinformation, Warninformation oder als Eingangsgröße für eine Lüftersteuerung erkennbar und entsprechend weiterverarbeitbar ist. Von Vorteil ist dabei, dass anhand eines einzigen Spannungspegels, nämlich dem in der Signalleitung übertragenen Spannungswert das gesamte System auf Fehlfunktion oder Gefahrzustand in einfacher Weise überwachbar ist. Bei Detektion der Maximalspannung ist ein Fehlerzustand, wie Übertemperatur, Kabelbruch oder dergleichen erkennbar. Bei Detektion einer ansonsten zulässigen Spannung ist die höchste Temperatur im System detektierbar. Somit lässt sich sogar ein Lüfter entsprechend ansteuern, also der detektierte Spannungswert als Steuergröße für die Lüfterdrehzahl verwenden.

Bei einer vorteilhaften Ausgestaltung ist ein den höchsten in den Modulen bestimmten Temperaturwert repräsentierendes Spannungssignal und/oder ein einen Kabelbruchzustand repräsentierendes Spannungssignal über eine einzige Signalleitung an eine zentrale Einheit, insbesondere Auswerteeinheit mit Schnittstelle und Verbrauchern, leitbar. Von Vorteil ist dabei, dass verschiedene Zustände des Systems über eine einzige Signalleitung weiterleitbar sind. Dabei sind die Informationen in dem Analogwert der Spannung codiert. Denn bei Auftreten der Maximalspannung liegt ein gefährlicher zustand vor, wie Kabelbruch oder Übertemperatur zumindest eines Moduls. Ansonsten repräsentiert der Spannungswert die höchste Temperatur des Systems.

Bei einer vorteilhaften Ausgestaltung ist als Temperatursensor ein temperaturabhängiger Widerstand in einer Messbrücke, insbesondere Wheatstone-Brücke, angeordnet, deren Ausgangspannungssignal einem Messverstärker, insbesondere Operationsverstärker, zugeführt wird, dessen Ausgangssignal über ein Stromventil, insbesondere Diode, geführt ist und ein den vom Temperatursensor bestimmten Temperaturwert repräsentierendes Spannungssignal ist. Von Vorteil ist dabei, dass eine hochgenaue Bestimmung der Temperatur ermöglicht ist. Die ausgangsseitige Diode ermöglicht eine Weiterleitung der größeren Spannung, also entweder der Eingangsspannung oder der vom Messverstärker erzeugten Ausgangsspannung, an den Ausgang.

Bei einer vorteilhaften Ausgestaltung, die kein Teil der vorliegenden Erfindung ist, werden bei sternförmiger Zuführung der Ausgangsspannungssignale alle den vom jeweiligen Temperatursensor bestimmten Temperaturwert repräsentierende Spannungssignale zusammengeführt zur zentralen Einheit. Von Vorteil ist dabei, dass eine beliebige Anzahl von Modulen auf diese Weise zusammenführbar ist. Außerdem ist eine sehr einfache Verdrahtung ausreichend, bei der nur das Ausgangsspannungssignal auf eine gemeinsame Signalleitung elektrisch durchleitbar sein muss. Allerdings liegt ein niedriger Innenwiderstand an der Signalleitung, so dass diejenige Schaltungsanordnung, welche den höchsten Ausgangsspannungswert aufweist, einen im Vergleich zur Verwendung von nur einem einzigen Modul sehr hohen Strom erzeugen muss. Denn der Innenwiderstand ist durch die Parallelschaltung der ausgangsseitigen Innenwiderstände der Schaltungsanordnungen gebildet.

Bei einer vorteilhaften Ausgestaltung wird bei der Reihen-Anordnung der Schaltungsanordnungen das den vom Temperatursensor bestimmten Temperaturwert repräsentierende Spannungssignal einer jeweiligen Schaltungsanordnung der in der Reihe direkt nachfolgenden Schaltungsanordnung als Eingangssignal zugeführt und das den vom Temperatursensor bestimmten Temperaturwert repräsentierende Spannungssignal wird der in der Reihe letzten Schaltungsanordnung der zentralen Einheit zugeführt. Von Vorteil ist dabei, dass jede Schaltungsanordnung nur einen geringen Ausgangsstrom zur Verfügung stellen muss.

Bei einer vorteilhaften Ausgestaltung wird in der jeweiligen Schaltungsanordnung das den vom Temperatursensor bestimmten Temperaturwert repräsentierende Spannungssignal als Ausgangsspannung der Schaltungsanordnung weitergeleitet, solange die Eingangsspannung nicht größer ist, und andernfalls die Eingangsspannung als Ausgangspannung weitergeleitet wird.

Bei einer alternativen Ausgestaltung wird als Ausgangsspannung das Maximum aus Eingangsspannung und aus dem vom Temperatursensor bestimmten Temperaturwert repräsentierende Spannungssignal weitergeleitet. Von Vorteil ist dabei, dass nur die höchste auftretende Temperatur überwacht wird und die Auswertung unabhängig von der Anzahl der Module ist.

Bei einer vorteilhaften Ausgestaltung ist in der jeweiligen Schaltungsanordnung ein Mittel zur Überwachung der Differenz aus der Eingangsspannung der Schaltungsanordnung und aus dem den vom Temperatursensor bestimmten Temperaturwert repräsentierenden Spannungssignal angeordnet, so dass bei Überschreiten eines kritischen Wertes des Betrages der Differenz als Ausgangssignal eine Ausgangssignalspannung herausgegeben wird, die maximal ist und/oder einen Fehlerzustand repräsentiert,
insbesondere wobei als Ausgangsspannung das Maximum aus Eingangsspannung, aus dem vom Temperatursensor bestimmten Temperaturwert repräsentierende Spannungssignal und aus dem von dem Überwachungsmittel herausgegebener Ausgangsspannung weitergeleitet wird,
insbesondere wobei ein Hysterese-berücksichtigendes Mittel, insbesondere Schmitt-Trigger, vorgesehen ist.
insbesondere wobei der kritische Wert durch die Dimensionierung von Widerständen vorgegeben ist. Von Vorteil ist dabei, dass mittels der Überwachung, ob die Spannung in einem vorgegebenen Spannungsbereich liegt, auch Fehlzustände detektierbar sind. Mittels der Hysterese wird die Schwingneigung des Systems unterdrückt.
Bei einer vorteilhaften Ausgestaltung weist jedes Modul Batterie-, Kondensator- oder Akkuzellen auf, die elektrisch zueinander parallel oder in Reihe geschaltet sind und in einem gemeinsamen Gehäuse des Moduls angeordnet sind. Von Vorteil ist dabei, dass jedes Modul keine Kleinspannung, wie 1 Volt bis 3 Volt, zur Verfügung stellt sondern jedes Modul eine Spannung zwischen 30 Volt und 60 Volt oder gar bis zu 120 Volt zur Verfügung stellt.

Weitere Vorteile ergeben sich aus den Unteransprüchen 2-8. Die Erfindung wird nun anhand von Abbildungen näher erläutert:
In der Figur 1 ist ein erfindungsgemäßes Funktionsschema gezeigt, wobei Module vorgesehen sind.
In der Figur 2 ist ein Verknüpfungsglied gezeigt, welches einem jeweiligen Modul zugeordnet ist bei serieller Anordnung.
In der Figur 3 ist ein Verknüpfungsglied gezeigt, welches einem jeweiligen Modul zugeordnet ist bei paralleler, also sternförmiger, Anordnung.
In der Figur 4 ist eine Erweiterung zur Figur 2 gezeigt, wobei eine Kabelbruchüberwachung zusätzlich vorgesehen ist.

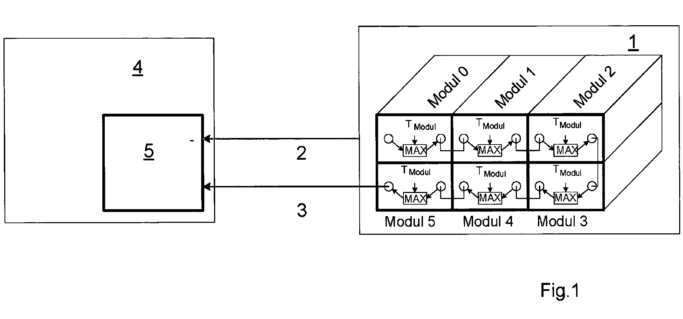

Wie in der Figur 1 gezeigt ist ein Energiespeicher 1 zusammengesetzt aus räumlich voneinander beabstandeten oder miteinander verbundenen Modulen (Modul 0, Modul 1, Modul 2, Modul 3, Modul 4, Modul 5). Vorzugsweise stellt jedes der Module (Modul 0, Modul 1, Modul 2, Modul 3, Modul 4, Modul 5) eine Gleichspannungsquelle zur Verfügung, beispielsweise zwischen 20 Volt und 100 Volt, und die Gleichspannungsquellen sind miteinander elektrisch in Reihe geschaltet. Somit ist bei sechs Modulen eine Gesamtspannung zwischen 120 Volt und 600 Volt zur Verfügung stellbar.

Die vom Energiespeicher 1 zur Verfügung gestellte Gleichspannung versorgt eine Vorrichtung, welche ein elektrisches Verbrauchersystem 4 umfasst. Das Verbrauchersystem 4 weist beispielhaft einen umrichtergespeisten Elektromotor auf, der die Vorrichtung antreibt, so dass sie als fahrerloses Transportsystem verwendbar ist oder als entsprechendes Elektrofahrzeug.

Der Energiespeicher 1 ist mit der Vorrichtung verbunden und somit mit der Vorrichtung vom Elektromotor mitbewegbar.

Vom Energiespeicher 1 führen ein Leistungsübertragungskanal und ein Signalübertragungssignal zum Verbrauchersystem 4, das auch Signalelektronik und Leistungselektronik aufweist.

Als Leistungskanal sind elektrische Leitungen 2 zur Übertragung von elektrischer Leistung verwendet und als Signalübertragungskanal eine Signalleitung 3. Der Signalübertragungskanal muss also nicht mehrkanalig sein sondern es genügt eine einzige Signalleitung 3.

Die Signalleitung 3 führt zu einer Schnittstelle 5 des Verbrauchersystems. Über die Signalleitung 3 ist somit weitermeldbar, ob der Betriebszustand des Energiespeichers 1 zulässig ist oder ob ein Fehlerzustand, beispielsweise durch Überhitzen eines Moduls, auftritt.

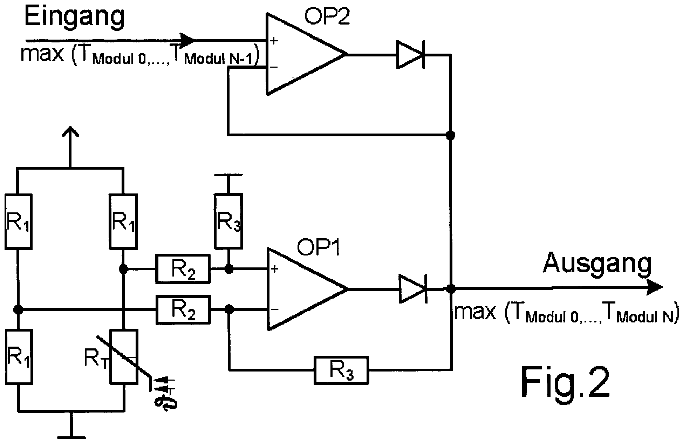

Wie in Figur 2 gezeigt, weist jedes der Module einen Temperatursensor R_T auf. Dieser ist in wärmeleitender Verbindung mit dem restlichen Modul angeordnet. Der Temperatursensor R_T ist in einer Wheatstone-Brücke mit drei Widerständen R1 angeordnet, wobei die auftretende Messspannung als Sensorsignal einem ersten Operationsverstärker OP1 über die Widerstände R2 zugeführt wird. Die Widerstände R3 bilden die entsprechenden Spannungsteiler, wobei einer der Widerstände R3 gegen Masse und der andere mit dem Ausgangssignal des Operationsverstärkers OP1 über eine Diode verbunden ist. Somit ist der Verstärkungsfaktor des Operationsverstärkers OP1 festgelegt.

Das Eingangssignal der Schaltungsanordnung nach Figur 2 wird einem zweiten Operationsverstärker OP2 zugeführt, dessen Ausgangssignal wiederum über eine Diode geführt ist, deren Ausgangssignal einerseits an einen der Eingänge des zweiten Operationsverstärkers OP2 geführt wird und andererseits elektrisch zusammengeführt wird mit dem Ausgangssignal der Diode, welcher das Ausgangssignal des anderen Operationsverstärkers zugeführt wird.

Durch die Zusammenführung ist ein Ausgangssignal der gesamten Schaltungsanordnung nach Figur 2 gebildet, welches dem Maximum, also dem größeren Spannungs-Wert, der Eingangsspannung, welche dem zweiten Operationsverstärker OP2 zugeführt wird und der mittels des ersten Operationsverstärkers OP1 ausgangsseitig erzeugten Spannung.

Jedes der Module (Modul 0, Modul 1, Modul 2, Modul 3, Modul 4, Modul 5) weist eine Schaltungsanordnung nach Figur 2 auf, wobei diese Schaltungsanordnungen in Reihe verbunden sind, indem das jeweilige Ausgangssignal als Eingangssignal der Schaltungsanordnung des nachfolgenden Moduls verwendet ist. Das Eingangssignal der Schaltungsanordnung des ersten Moduls (M0) wird auf ein festes Potential gelegt, vorzugsweise Masse oder je nach Vorzeichen des Temperaturkoeffizienten des Temperatursensors ein maximales oder minimales Potential. Das feste Potential ist auf jeden Fall derart, dass die in der Reihe nachfolgenden Temperatursensorsignale über die jeweiligen Schaltungsanordnungen zu ihrem logischen Maximalwert verknüpft werden, so dass das feste Potential das Verknüpfungsergebnis nicht verfälscht. Alternativ kann auch der zweite Operationsverstärker OP2 der ersten Schaltungsanordnung weggelassen werden oder auf irgendeine Weise unwirksam gemacht werden.

Das Ausgangssignal der Schaltungsanordnung des letzten Moduls (M5) der Reihe wird an die Schnittstelle 5 geführt, so dass der Maximalwert der Temperatur über eine einzige Signalleitung 3 an die Vorrichtung übertragbar ist.

Hierbei wird bei Überschreiten einer kritischen Temperatur in einem einzigen der Module von einer mit der Schnittstelle 5 verbundenen Auswerteeinheit ein Fehlersignal und /oder ein Warnsignal erzeugt.

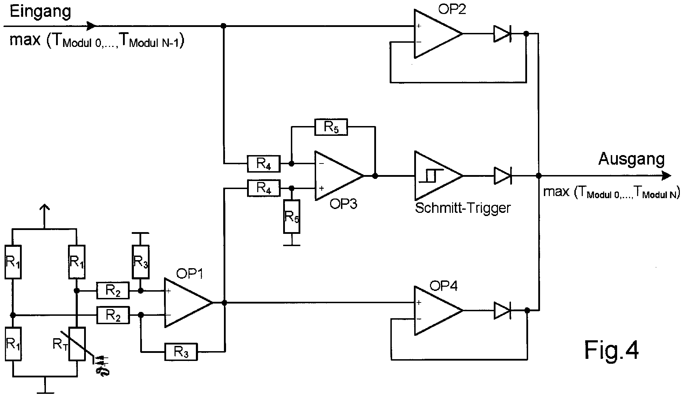

Wie in Figur 4 gezeigt, ist auch ein Schaltungserweiterung, welche die Operationsverstärker OP3 und OP4 samt der Widerstände R4 und R5 erforderlich macht, zur Kabelbrucherkennung der Schaltungsanordnung nach Figur 2 integrierbar.

Dabei wird ein Bruch des temperaturabhängigen Widerstandes R_T erkannt, indem eine Ausgangsspannung am OP1 auftritt, die außerhalb eines definierten Messbereichs liegt, welcher durch die Widerstände R4 und R5 relativ zur Eingangsspannung definiert ist. Somit wird also bei einer unzulässigen, also außerhalb des Messbereichs liegenden Messspannung, ein Fehlersignal an die Schnittstelle 5 geleitet. Ebenso wird bei Unterbrechung der Signalleitung 3 eine undefinierte Messspannung erzeugt und somit ein Fehlersignal detektierbar.

Vorzugsweise ist dem Operationsverstärker OP3 ein Schmitt-Trigger nachgeschaltet, so dass eine Hysterese erzeugt wird.

Dem Operationsverstärker OP3 wird die Differenz zwischen der Eingangsspannung, also Ausgangsspannung der Schaltungsanordnung des in der Reihe vorangehenden Moduls, zugeführt. Außerdem wird ihm die Temperatur-Messspannung des Moduls zugeführt. Die Spannungsdifferenz wird durch den als Komparator arbeitenden Operationsverstärker OP3 mit einer Schwellspannung verglichen, wobei der Schmitt-Trigger eine Hysterese beim Vergleich bewirkt. Beim Überschreiten der Schwelfspannung wird die maximale Versorgungsspannung auf den Ausgangs geschaltet, die außerhalb des zulässigen Messbereichs liegt und somit wird durch die Schnittstelle 5 ein Fehler erkannt.

Die Schaltungsanordnung nach Figur 4 ist wiederum in allen Modulen angeordnet, wobei im ersten Modul der Reihe die Kabelbrucherkennung wiederum unschädlich gemacht ist oder alternativ der Eingang der Schaltungsanordnung des ersten Moduls (M0) mit dem Ausgang der Schaltungsanordnung des letzten Moduls (Modul N, MN) verbunden ist.

Somit ist also durch die Auswerteeinheit, welche mit der Schnittstelle 5 verbunden ist, erkennbar, ob der Widerstand R_T gebrochen ist, kurzgeschlossen ist und/oder eine Unterbrechung der elektrischen Verbindung der Signalleitungen, beispielsweise zwischen aufeinander folgenden Modulen vorhanden ist.

Die gesamte Information über Kabelbruch und maximal auftretender Temperatur wird über die Signalleitung 3 übertragen - unabhängig von der Anzahl der Module und unabhängig von der Reihenfolge der Module in der Reihe. Es muss also nur eine Signalleitung 3 zur Auswerteeinheit geführt werden. Diese Auswerteeinheit erkennt einerseits Fehlerzustände infolge des Auftretens der Maximalspannung und andererseits ist im zulässigen Betrieb sogar die höchste der in den jeweiligen Modulen erfasste Temperatur erkennbar. Somit ist auch eine zentrale Ansteuerung eines Lüfters, dessen Kühlluftstrom an den Modulen entlang streicht, ausführbar in Abhängigkeit von der höchsten Temperatur. Beispielsweise wird mit zunehmender Erhöhung der Temperatur der Kühlluftstrom verstärkt mittels Drehzahlerhöhung des Lüfters. Die Drehzahl ist hierbei beispielhaft proportional zur Temperatur. Alternativ ist die Lüfterleistung durch unterschiedlich lange Ein- und Ausschaltzeiten des Lüfters regelbar, da die thermische Zeitkonstante der Module gegenüber den möglichen Ein- und Ausschaltzeiten des Lüfters groß ist. Vorzugsweise ist sogar eine Regelung, insbesondere auch prädiktive Regelung, der höchsten Modultemperatur durch die zentrale Einheit ausführbar.
Bei der bisher beschriebenen Reihe von Modulen hat, vorzugsweise mit Ausnahme des ersten Moduls der Reihe, jedes Modul ein Eingangssignal und ein Ausgangssignal, die jeweils als analoge Spannungswerte ausgeführt sind. Die Temperaturmessung ist mittels des Temperaturabhängigen Widerstands jedes Moduls ausführbar. Vorteiligerweise wird der Widerstandswert mit Hilfe einer Messbrücke ausgewertet und in ein Spannungssignal gewandelt, wie in Figur 2 gezeigt. Dieses Spannungssignal wird mittels des Operationsverstärkers OP2 mit dem Ausgangssignal des in der Reihe vorangehenden Moduls verglichen und die größere Spannung an den Ausgang angelegt. Der Ausgang des letzten Moduls ist mittels der Signalleitung 3 an die Schnittstelle 5 geführt und von der Auswerteeinheit dort ausgewertet.

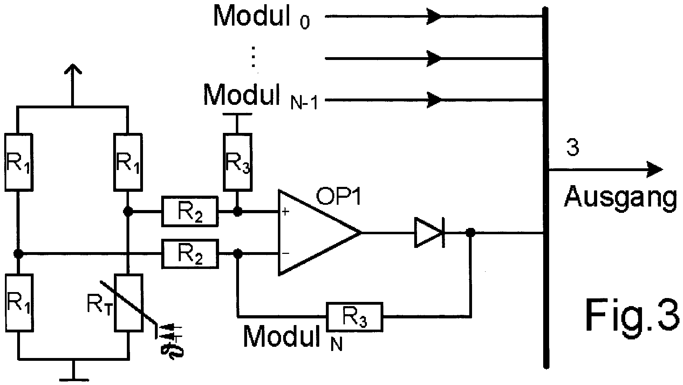

Jedes Modul weist wiederum eine Anzahl von Akkuzellen oder Kondensatorzellen auf, so dass die hohe Temperatur an einer der Zellen erzeugt sein kann. Die Zellen sind in entsprechenden Aufnahmebereichen eines Kunststoffteils des Moduls vorgesehen.
Wie in Figur 3 gezeigt, ist auch eine parallele Verknüpfung der Ausgangssignale von jedem Modul jeweils zugeordneten Schaltungsanordnungen ermöglicht, so dass die Module nicht in Reihe angeordnet werden müssen. Diese Ausgestaltung ist jedoch kein Teil der vorliegenden Erfindung. Hierbei weist jedes Modul die in Figur 3 gezeigte Messschaltung auf. Dabei gleicht die Messschaltung der Beschaltung des ersten Operationsverstärkers OP1 aus Figur 2. Somit wird also der vom temperaturempfindlichen Widerstand R_T bewirkte Differenzspannungswert der Wheatstone'schen Messbrücke über die Widerstände R2 an die Eingänge des Operationsverstärkers geleitet und wiederum ein Ausgangsspannungswert über die Diode an eine gemeinsame Signalleitung 3 geleitet. Somit wird ebenfalls der höchste auftretendes Ausgangsspannungswert für die Signalleitung 3 erzeugt, welche wiederum zur Schnittstelle 5 führt und von der Auswerteeinheit in der zur Figur 2 geschilderten Weise ausgewertet wird. Somit ist die Signalleitung 3 sternförmig von der Schnittstelle 5 zu den Modulen (Modul 0, Modul 1, Modul 2, Modul 3, Modul 4, Modul 5) geführt. In Figur 3 ist statt der konkreten Anzahl von sechs Modulen eine Anzahl N angedeutet.

Bei weiteren erfindungsgemäßen Ausführungsbeispielen ist eine von der Anzahl sechs unterschiedliche Anzahl von Modulen bei einem weiteren erfindungsgemäßen System eingesetzt. Alternativ können die von den Modulen zur Verfügung gestellten Gleichspannungsquellen elektrisch parallel geschaltet sein.

Bei weiteren erfindungsgemäßen Ausführungsbeispielen ist statt der Operationsverstärker ein anderer Vergleicher oder Differenzverstärker verwendet.

Bei weiteren erfindungsgemäßen Ausführungsbeispiel entsprechend der Figur 2 ist anstatt der Masseverbindung des Eingangs der Schaltungsanordnung des ersten Moduls (M0) alternativ auch ein Verwenden und Zuführen des Ausgangssignals des letzten Moduls (Modul N, MN) als Eingangssignal der Schaltungsanordnung des ersten Moduls (M0) ausführbar.

### Bezugszeichenliste

1 Energiespeicher
2 elektrische Leitungen zur Übertragung von elektrischer Leistung
3 Signalleitung
4 System, insbesondere umfassend elektrische Verbraucher, wie Elektromotor, Signalelektronik und/oder Leistungselektronik
5 Schnittstelle
R1 Widerstand
R2 Widerstand
R3 Widerstand
R4 Widerstand
R5 Widerstand
R_T Temperaursensor, insbesondere temperaturabhängiger Widerstand

Eingang Eingangssignal
Ausgang Ausgangssignal

Modul 0 erstes Modul der Reihenanordnung
Modul 1 zweites Modul der Reihenanordnung
Modul 2 drittes Modul der Reihenanordnung

Modul 3 viertes Modul der Reihenanordnung
Modul 4 fünftes Modul der Reihenanordnung
Modul 5 sechstes Modul der Reihenanordnung

N Anzahl der Module

## Patentansprüche

1. Modulares System (1), insbesondere modular aufgebauter Energiespeicher,
wobei das modulare System (1) eine zentrale Einheit (4, 5) und Module (M0, ..., MN) aufweist,
wobei die Module (M0, ..., MN) räumlich getrennt oder direkt miteinander verbunden sind,
wobei jedes Modul eine Schaltungsanordnung mit einem Temperatursensor (R_T) aufweist, wobei
jede Schaltungsanordnung ein Ausgangsspannungssignal, insbesondere als Analogspannung, erzeugt, **dadurch gekennzeichnet, dass**: die Schaltungsanordnungen in Reihe angeordnet sind, wobei das Ausgangsspannungssignal einer Schaltungsanordnung als Eingangssignal einer in der Reihe direkt nachgeordneten Schaltungsanordnung zugeführt wird, wobei das Ausgangsspannungssignal der in der Reihe letzten Schaltungsanordnung einer zentralen Einheit (4, 5) zugeführt wird, das System (1) derart eingerichtet ist, dass ein den höchsten in den Modulen (M0, ..., MN) bestimmten Temperaturwert repräsentierendes Spannungssignal und/oder ein einen Kabelbruchzustand repräsentierendes Spannungssignal über eine einzige Signalleitung (3) an eine zentrale Einheit (4, 5), insbesondere Auswerteeinheit mit Schnittstelle (5) und Verbrauchern (4), geleitet wird, bei der Reihen-Anordnung der Schaltungsanordnungen das den vom Temperatursensor (R_T) bestimmten Temperaturwert repräsentierende Spannungssignal einer jeweiligen Schaltungsanordnung der in der Reihe direkt nachfolgenden Schaltungsanordnung als Eingangssignal zugeführt wird und wobei das den vom Temperatursensor (R_T) bestimmten Temperaturwert repräsentierende Spannungssignal der in der Reihe letzten Schaltungsanordnung der zentralen Einheit (4, 5) zugeführt wird, in der jeweiligen Schaltungsanordnung das den vom Temperatursensor (R_T) bestimmten Temperaturwert repräsentierende Spannungssignal als Ausgangsspannung der Schaltungsanordnung weitergeleitet wird, solange die Eingangsspannung nicht größer ist, und andernfalls die Eingangsspannung als Ausgangspannung weitergeleitet wird, das Eingangssignal der Schaltungsanordnung des ersten Moduls (M0) auf ein festes Potential gelegt wird.

2. Modulares System (1) nach Anspruch 1,
**dadurch gekennzeichnet, dass**
die Module (M0, ..., MN), insbesondere Energiespeichermodule, jeweils eine Spannungsquelle zur Verfügung stellen und die Spannungsquellen in Reihe oder parallel zusammengeschaltet sind, so dass die somit zur Verfügung gestellte Gesamtspannungsquelle die zentrale Einheit (4, 5) versorgt, insbesondere mit elektrischer Leistung.

3. Modulares System (1) nach mindestens einem der vorangegangenen Ansprüche,
**dadurch gekennzeichnet, dass**
die zentrale Einheit (4, 5) einen umrichtergespeisten Elektromotor (4) und/oder einen anderen elektrischen Verbraucher (4) aufweist, der aus den Modulen (M0, ..., MN) versorgbar ist, insbesondere versorgt wird.

4. Modulares System (1) nach mindestens einem der vorangegangenen Ansprüche,
**dadurch gekennzeichnet, dass**
die zentrale Einheit (4, 5) eine Auswerteeinheit aufweist, mit welcher der über die Signalleitung (3) übertragene Spannungswert als Fehlerinformation, Warninformation oder als Eingangsgröße für eine Lüftersteuerung erkennbar und entsprechend weiterverarbeitbar ist.

5. Modulares System (1) nach mindestens einem der vorangegangenen Ansprüche,
**dadurch gekennzeichnet, dass**
als Temperatursensor (R_T) ein temperaturabhängiger Widerstand in einer Messbrücke,
insbesondere Wheatstone-Brücke, angeordnet ist, deren Ausgangspannungssignal einem Messverstärker (OP1), insbesondere Operationsverstärker (OP1), zugeführt wird, dessen Ausgangssignal über ein Stromventil, insbesondere Diode, geführt ist und ein den vom Temperatursensor (R_T) bestimmten Temperaturwert repräsentierendes Spannungssignal ist.

6. Modulares System (1) nach mindestens einem der vorangegangenen Ansprüche,
**dadurch gekennzeichnet, dass**
in der jeweiligen Schaltungsanordnung ein Mittel zur Überwachung der Differenz aus der Eingangsspannung der Schaltungsanordnung und aus dem den vom Temperatursensor (R_T) bestimmten Temperaturwert repräsentierenden Spannungssignal angeordnet ist, so dass bei Überschreiten eines kritischen Wertes des Betrages der Differenz als Ausgangssignal eine Ausgangssignalspannung herausgegeben wird, die maximal ist und/oder einen Fehlerzustand repräsentiert,
insbesondere wobei als Ausgangsspannung das Maximum aus Eingangsspannung, aus dem vom Temperatursensor (R_T) bestimmten Temperaturwert repräsentierende Spannungssignal und
aus dem von dem Überwachungsmittel herausgegebener Ausgangsspannung weitergeleitet wird,
insbesondere wobei ein Hysterese-berücksichtigendes Mittel, insbesondere Schmitt-Trigger, vorgesehen ist.
insbesondere wobei der kritische Wert durch die Dimensionierung von Widerständen (R4, R5) vorgegeben ist.

7. Modulares System (1) nach mindestens einem der vorangegangenen Ansprüche,
**dadurch gekennzeichnet, dass**
jedes Modul Batterie-, Kondensator- oder Akkuzellen aufweist, die elektrisch zueinander parallel oder in Reihe geschaltet sind und in einem gemeinsamen Gehäuse des Moduls angeordnet sind.

8. Modulares System (1) nach mindestens einem der vorangegangenen Ansprüche,
**dadurch gekennzeichnet, dass**
als Eingangssignal der Schaltungsanordnung des ersten Moduls (M0) Masse oder eine Nullspannung verwendet wird
oder dass
als Eingangssignal der Schaltungsanordnung des ersten Moduls (M0) Masse oder das Ausgangsspannungssignal des letzten Moduls (MN) verwendet ist.

## Claims

1. Modular system (1), in particular modularly constructed energy store,
wherein the modular system (1) has a central unit (4, 5) and modules (M0, ..., MN),
wherein the modules (M0, ..., MN) are spatially separated or directly connected to one another,
wherein each module has a circuit arrangement with a temperature sensor (R_T), wherein
each circuit arrangement generates an output voltage signal, in particular as analogue voltage,
**characterised in that**:
the circuit arrangements are arranged in series, wherein the output voltage signal of one circuit arrangement is supplied as input signal to a circuit arrangement arranged directly downstream in the series, wherein the output voltage signal of the last circuit arrangement in the series is supplied to a central unit (4, 5),
the system (1) is configured in such a way that a voltage signal representing the highest temperature value determined in the modules (M0, ..., MN) and/or a voltage signal representing a cable break state is passed to a central unit (4, 5) via a single signal line (3), in particular evaluation unit with interface (5) and consumers (4),
in the series arrangement of the circuit arrangements the voltage signal representing the temperature value determined by the temperature sensor (R_T) is supplied to a respective circuit arrangement of the circuit arrangement arranged directly downstream in the series as input signal and wherein the voltage signal representing the temperature value determined by the temperature sensor (R_T) is supplied to the last circuit arrangement of the central unit (4, 5) in the series,
in the respective circuit arrangement the voltage signal representing the temperature value determined by the temperature sensor (R_T) is passed on to the circuit arrangement as output voltage as long as the input voltage is not greater, and otherwise the input voltage is passed on as output voltage,
the input signal of the circuit arrangement of the first module (M0) is set to a fixed potential.

2. Modular system (1) according to claim 1,
**characterised in that**
the modules (M0, ..., MN), in particular energy storage modules, each provide a voltage source and the voltage sources are connected together in series or in parallel, so that the total voltage source thus provided supplies the central unit (4, 5), in particular with electric power.

3. Modular system (1) according to at least one of the preceding claims,
**characterised in that**
the central unit (4, 5) has a converter-fed electric motor (4) and/or another electric consumer (4) which can be supplied, in particular is supplied, from the modules (M0, ..., MN).

4. Modular system (1) according to at least one of the preceding claims,
**characterised in that**
the central unit (4, 5) has an evaluation unit, with which the voltage value transmitted via the signal line (3) is detectable as error information, warning information or as input variable for a fan control and is accordingly further processible.

5. Modular system (1) according to at least one of the preceding claims,
**characterised in that**
as temperature sensor (R_T), a temperature-dependent resistor is arranged in a measuring bridge, in particular Wheatstone bridge, the output voltage signal of which is supplied to a measuring amplifier (OP1), in particular operational amplifier (OP1), the output signal of which is routed via a current valve, in particular diode, and is a voltage signal representing the temperature value determined by the temperature sensor (R_T).

6. Modular system (1) according to at least one of the preceding claims,
**characterised in that**
a means for monitoring the difference between the input voltage of the circuit arrangement and the voltage signal representing the temperature value determined by the temperature sensor (R_T) is arranged in the respective circuit arrangement, so that if a critical value of the amount of the difference is exceeded, as output signal an output signal voltage is issued which is at a maximum and/or represents an error state,
in particular wherein as output voltage the maximum between input voltage, the voltage signal representing the temperature value determined by the temperature sensor (R_T) and the output voltage issued by the monitoring means is passed on,
in particular wherein a hysteresis-considering means, in particular Schmitt trigger, is provided,
in particular wherein the critical value is predetermined by the dimensioning of resistors (R4, R5).

7. Modular system (1) according to at least one of the preceding claims,
**characterised in that**
each module has battery, capacitor or accumulator cells, which are electrically connected to one another in parallel or in series and are arranged in a common housing of the module.

8. Modular system (1) according to at least one of the preceding claims,
**characterised in that**
earth or a zero voltage is used as input signal of the circuit arrangement of the first module (M0)
or **in that**
earth or the output voltage signal of the last module (MN) is used as input signal of the circuit arrangement of the first module (M0).

## Revendications

1. Système modulaire (1), en particulier accumulateur d'énergie à structure modulaire, lequel système modulaire (1) comporte une unité centrale (4, 5) et des modules (M0, ..., MN),
lesquels modules (M0, ..., MN) sont séparés spatialement ou reliés directement entre eux,
chaque module comportant un circuit comprenant un capteur de température (R_T), chaque circuit générant un signal de tension de sortie, en particulier sous la forme d'une tension analogique,
**caractérisé en ce que**
les circuits sont disposés en série, le signal de tension de sortie d'un circuit étant amené en tant que signal d'entrée à un circuit disposé directement après dans la série, le signal de tension de sortie du dernier circuit dans la série étant amené à une unité centrale (4, 5),
le système (1) est conçu de telle sorte qu'un signal de tension représentant la valeur de température la plus élevée déterminée dans les modules (M0, ..., MN) et/ou un signal de tension représentant un état de rupture de câble soit amené par une seule ligne de signalisation (3) à une unité centrale (4, 5), en particulier une unité d'évaluation comprenant une interface (5) et des consommateurs (4),
dans la disposition en série des circuits, le signal de tension représentant la valeur de température déterminée par le capteur de température (R_T) est amené en tant que signal d'entrée à un circuit respectif directement suivant dans la série, le signal de tension représentant la valeur de température déterminée par le capteur de température (R_T) du dernier circuit dans la série étant amené à l'unité centrale (4, 5),
dans le circuit respectif, le signal de tension représentant la valeur de température déterminée par le capteur de température (R_T) est transmis en tant que tension de sortie du circuit aussi longtemps que la tension d'entrée n'est pas supérieure, et dans le cas contraire la tension d'entrée est transmise en tant que tension de sortie,
le signal d'entrée du circuit du premier module (M0) est mis à un potentiel fixe.

2. Système modulaire (1) selon la revendication 1,
**caractérisé en ce que**
les modules (M0, ..., MN), en particulier des modules accumulateurs d'énergie, mettent chacun à disposition une source de tension et les sources de tension sont couplées en série ou en parallèle de sorte que la source de tension totale ainsi mise à disposition alimente l'unité centrale (4, 5), en particulier en puissance électrique.

3. Système modulaire (1) selon au moins l'une des revendications précédentes,
**caractérisé en ce que**
l'unité centrale (4, 5) comporte un moteur électrique (4) alimenté par convertisseur et/ou un autre consommateur électrique (4) qui peut être alimenté, en particulier est alimenté à partir des modules (M0, ..., MN).

4. Système modulaire (1) selon au moins l'une des revendications précédentes,
**caractérisé en ce que**
l'unité centrale (4, 5) comporte une unité d'évaluation avec laquelle la valeur de tension transmise par la ligne de signalisation (3) peut être reconnue comme information de défaut, information d'avertissement ou comme grandeur d'entrée pour une commande de ventilateur et ensuite traitée en conséquence.

5. Système modulaire (1) selon au moins l'une des revendications précédentes,
**caractérisé en ce**
**qu'**une résistance variable avec la température est disposée en tant que capteur de température (R_T) dans un pont de mesure, en particulier un pont de Wheatstone, dont le signal de tension de sortie est amené à un amplificateur de mesure (OP1), en particulier un amplificateur opérationnel (OP1), dont le signal de sortie est conduit par une vanne de courant, en particulier une diode, et est un signal de tension représentant la valeur de température déterminée par le capteur de température (R_T).

6. Système modulaire (1) selon au moins l'une des revendications précédentes,
**caractérisé en ce que**
dans le circuit respectif, un moyen de surveillance de la différence entre la tension d'entrée du circuit et le signal de tension représentant la valeur de température déterminée par le capteur de température (R_T) est disposé, de sorte que, en cas de dépassement d'une valeur critique du montant de la différence, il est délivré en tant que signal de sortie une tension de signal de sortie qui est maximale et/ou représente un état de défaut,
en particulier dans lequel est transmis, en tant que tension de sortie, le maximum de la tension d'entrée, du signal de tension représentant la valeur de température déterminée par le capteur de température (R_T) et de la tension de sortie délivrée par le moyen de surveillance,
en particulier dans lequel un moyen tenant compte de l'hystérésis, en particulier un trigger de Schmitt, est prévu,
en particulier dans lequel la valeur critique est définie par le dimensionnement de résistances (R4, R5).

7. Système modulaire (1) selon au moins l'une des revendications précédentes,
**caractérisé en ce que**
chaque module comporte des cellules de batterie, de condensateur ou d'accumulateur qui sont couplées entre elles électriquement en parallèle ou en série et disposées dans un boîtier commun du module.

8. Système modulaire (1) selon au moins l'une des revendications précédentes,
**caractérisé en ce**
**qu'**on utilise comme signal d'entrée du circuit du premier module (M0) la masse ou une tension nulle ou
**qu'**on utilise comme signal d'entrée du circuit du premier module (M0) la masse ou le signal de tension de sortie du dernier module (MN).
